# EUROPEAN PATENT APPLICATION

(11) **EP 4 438 343 A1**
(43) Date of publication of application: **02.10.2024**
(21) Application number: 22898155.1
(22) Date of filing: 23.06.2022
(51) Int. Cl.: B60C 13/00, B60C 19/00

(54) **PNEUMATIC TIRE**

(30) Priority: 25.11.2021 JP 2021191545
(71) Applicant: BRIDGESTONE CORPORATION, Chuo-ku Tokyo 104-8340 (JP)
(72) Inventor: SAITO Kazuma, Tokyo 104-8340 (JP); KITAHARA Atsushi, Tokyo 104-8340 (JP)
(74) Representative: Marks & Clerk LLP
(86) International application number: PCT/JP2022/025154
(87) International publication number: WO 2023/095370

(57) **Abstract**

In a pneumatic tire of this disclosure, in the reference condition, mass of a sidewall portion in a tire radial region between positions each spaced apart, from a tire maximum width position, by 15% of tire cross-sectional height to inner side and outer side in the tire radial direction is 1.5% to 5% of overall mass of the pneumatic tire.

## Description

### TECHNICAL FIELD

This disclosure relates to a pneumatic tire.

### BACKGROUND

In recent years, growing concern about environmental issues has led to greater demand for quieter tires. In response to this, technology has been proposed to increase the quietness of tires by making the sidewall portion thicker or providing a protrusion in the sidewall portion to suppress vibrations (see, for example, PTLs 1 and 2).

### CITATION LIST

### Patent Literature

PTL 1: JP H9-118111 A1
PTL 2: JP 2000-301920 A1

### SUMMARY

### (Technical Problem)

However, as environmental concerns require tires to be more fuel-efficient, thicker sidewalls could increase rolling resistance and reduce fuel efficiency due to increased weight. When the thickness is partially increased by providing a protrusion as in PTLs 1 and 2, the adverse effect on the rolling resistance can be minimized, but the improvement in quietness may not be sufficient. Thus, it has generally been difficult to achieve both improvement in quietness and suppression of increase in rolling resistance.

It is therefore an object of the present disclosure to provide a pneumatic tire that can improve quietness while suppressing an increase in rolling resistance.

### (Solution to Problem)

The gist structure of the present disclosure is as follows.
(1) A pneumatic tire, wherein
   when a condition in which the pneumatic tire is mounted on an applicable rim, filled to prescribed internal pressure, and unloaded is defined as a reference condition,
   in the reference condition, mass of a sidewall portion in a tire radial region between positions each spaced apart, from a tire maximum width position, by 15% of tire cross-sectional height to inner side and outer side in the tire radial direction is 1.5% to 5% of overall mass of the pneumatic tire.

As used herein, the "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the "rim" above includes current sizes as well as future sizes to be listed in the aforementioned industrial standards. An example of the "size as described in the future" could be the sizes listed as "FUTURE DEVELOPMENTS" in the ETRTO 2013 edition.). For sizes not listed in these industrial standards, the "applicable rim" refers to a rim with a width corresponding to the bead width of the tire. In addition, the "prescribed internal pressure" refers to the air pressure (maximum air pressure) corresponding to the maximum load capacity of a single wheel in the applicable size and ply rating, as described in the aforementioned JATMA, and others. In the case that the size is not listed in the aforementioned industrial standards, the "prescribed internal pressure" refers to the air pressure (maximum air pressure) corresponding to the maximum load capacity specified for each vehicle in which the tire is mounted.

### (Advantageous Effect)

According to the present disclosure, it is possible to provide a pneumatic tire that can improve quietness while suppressing an increase in rolling resistance.

### BRIEF DESCRIPTION OF THE DRAWINGS

In the accompanying drawings:
FIG. 1 is a partial cross-sectional view in the tire width direction of a pneumatic tire according to an embodiment of this disclosure;
FIG. 2 is a partial cross-sectional view in the tire width direction of a pneumatic tire according to an example of the first variant;
FIG. 3 is a partial cross-sectional view in the tire width direction of a pneumatic tire according to an example of the second variant;
FIG. 4 is a diagram providing the evaluation results of EXAMPLE 1;
FIG. 5 is a diagram providing the evaluation results of EXAMPLE 2 (Example 4, and Comparative Examples 2 and 3); and
FIG. 6 is a diagram providing the evaluation results of EXAMPLE 2 (Example 4 and Comparative Example 4).

### DETAILED DESCRIPTION

Hereinafter, embodiments of the present disclosure will be described in detail with reference to the drawings.

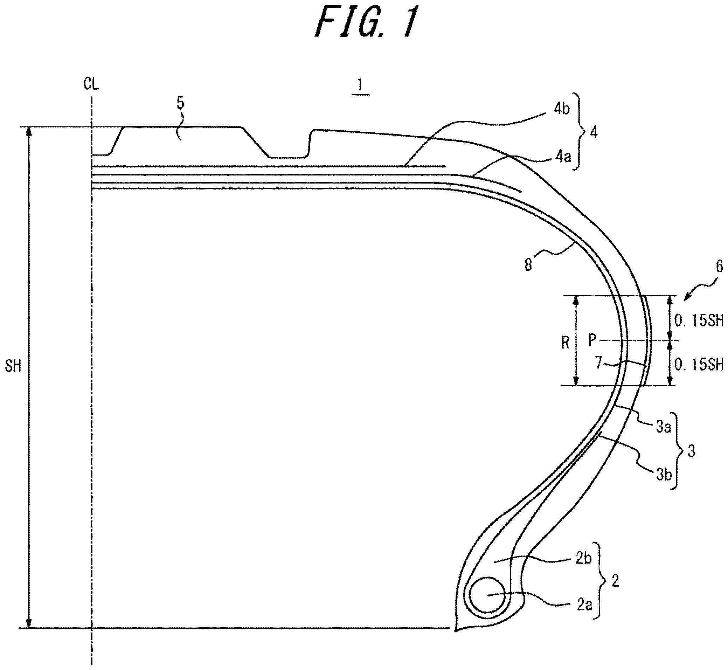

Figure 1 is a partial cross-sectional view in the tire width direction of a pneumatic tire according to an embodiment of this disclosure. Figure 1 illustrates only one half of the tire in the tire width direction bounded by the tire equatorial plane CL, but the same configuration is used for the other half. Figure 1 is a partial cross-sectional view in the tire width direction in the above-mentioned reference condition.

As illustrated in Figure 1, this pneumatic tire (hereinafter referred to simply as "tire") 1 has a pair of bead portions 2, a pair of sidewall portions 6 connected to the bead portions 2, and a tread portion 5 connected to the sidewall portions 6.

In this example, the bead portion 2 has a bead core 2a and a bead filler 2b. The bead core 2a, in this example, comprises a plurality of bead wires whose surroundings are coated with rubber. The bead wire, in this example, is formed by steel cords. The bead filler 2b is made of rubber or other materials and is located on the outer side of bead core 2a in the tire radial direction. In this example, the bead filler 2b has an abbreviated triangular cross-sectional shape with a decreasing thickness toward the outer side in the tire radial direction. On the other hand, the bead core 2a and the bead filler 2b are not limited to the above examples and can be configured in various ways, and the tire can be configured without the bead core 2a or the bead filler 2b.

As illustrated in Figure 1, the tire 1 has a carcass 3 consisting of one or more carcass plies that straddle the pair of bead portions 2 in a toroidal manner. The carcass 3 has a carcass body portion 3a disposed between the bead cores 2a, and carcass turn-up portions 3b that are folded around the bead core 2a from the inner side to the outer side in the tire width direction. In this example, the end of the carcass turn-up portion 3b is located on the inner side in the tire radial direction from the tire maximum width position, but the extending length of the carcass turn-up portion 3b from the inner side to the outer side in the tire width direction can be set as desired. The carcass 3 can be configured without the carcass turn-up portion 3b, or the carcass turn-up portion 3b can be wrapped around the bead core 2a. The carcass ply can be formed by coating organic fibers with rubber.

On the outer side in the tire radial direction of the crown portion of the carcass 3, a belt 4 and tread rubber that constitute a tread portion 5 are provided. The belt 4, for example, can be constituted by a plurality of belt layers stacked in the tire radial direction. In this example, the belt 4 is an inclined belt, consisting of two belt layers where the belt cords cross each other between the layers. For example, a steel cord can also be used as the belt cords. Note, that the number of belt layers, the inclined angle of belt cords, the width of each belt layer in the tire width direction, etc. are not limited and can be set as needed.

The tire 1 has an inner liner (not illustrated) on the tire inner surface 8.

Here, as illustrated in Figure 1, R is the tire radial region between positions each spaced apart, from a tire maximum width position, by 15% of tire cross-sectional height SH to inner side and outer side in the tire radial direction. The mass of the sidewall portion in the tire radial region R is 1.5% to 5% of the overall mass of the pneumatic tire 1. In this example, a rubber member (in this example, a rubber sheet) 7 is attached to the surface of the sidewall portion in the tire radial region R (only in the tire radial region R) to achieve the above mass range.

The following is a description of the effects of this pneumatic tire.

The inventors studied the phenomenon of noise generation due to tire vibration and found that the tire maximum width position and its vicinity is the main point (the area where the amount of amplitude displacement increases) at 800 Hz to 1000 Hz. Then, the inventors found that by locally increasing the mass in the tire radial region R between positions each spaced apart, from the tire maximum width position P, by 15% of the tire cross-sectional height SH to inner side and outer side in the tire radial direction (in the figure, 0.15 × SH each upward and downward), the amplitude of 800 Hz to 1000 Hz can be reduced to improve the quietness of the tire, and the increase in mass can be localized to minimize the increase in tire weight.

If the position where the weight is increased is outer side or inner side in the tire radial direction than the above tire radial region R, the effect of improving the quietness of the tire by reducing the amplitude of 800 Hz to 1000 Hz cannot be fully obtained.

Also, if the mass of the sidewall portion in the above tire radial region R is less than 1.5% of the overall mass of the pneumatic tire, the effect of suppressing vibration described above cannot be fully demonstrated and the quietness of the tire cannot be sufficiently improved. On the other hand, if the mass of the sidewall portion in the above tire radial region R is more than 5% of the overall mass of the pneumatic tire, the weight near the tire maximum width position P may become locally too large, resulting in a large weight bias, which may cause that part to flow or shift during vulcanization. For the same reason, it is more preferable that the mass of the sidewall portion in the tire radial region R is 1.8% to 4.5% of the overall mass of the pneumatic tire.

It is more preferable that in the reference condition, the mass of the sidewall portion in the tire radial region R (10%) between positions each spaced apart, from the tire maximum width position P, by 10% of tire cross-sectional height to inner side and outer side in the tire radial direction is 1.5% to 5% of the overall mass of the pneumatic tire. This is because the vibration can be reduced more effectively, further improving the quietness of the tire.

In this case, for the same reason, it is more preferable that the mass of the sidewall portion in the tire radial region R (10%) is 1.8% to 4.5% of the overall mass of the pneumatic tire.

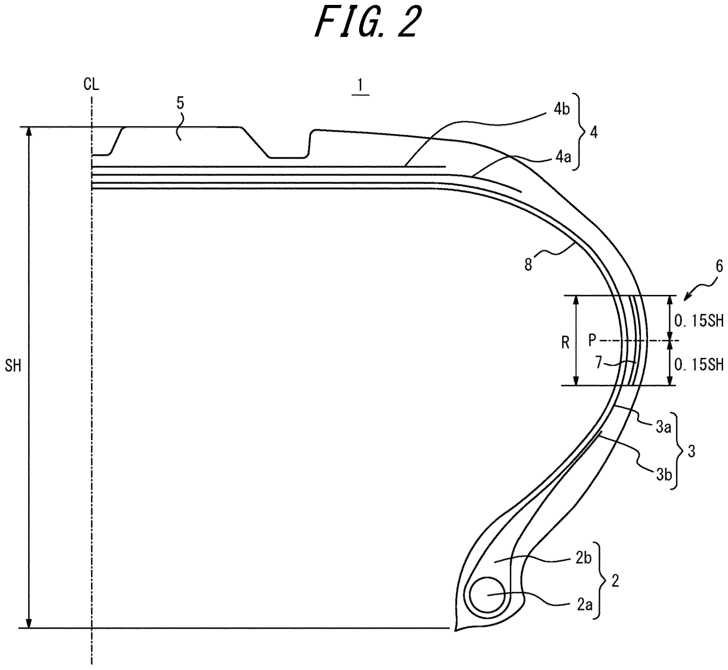

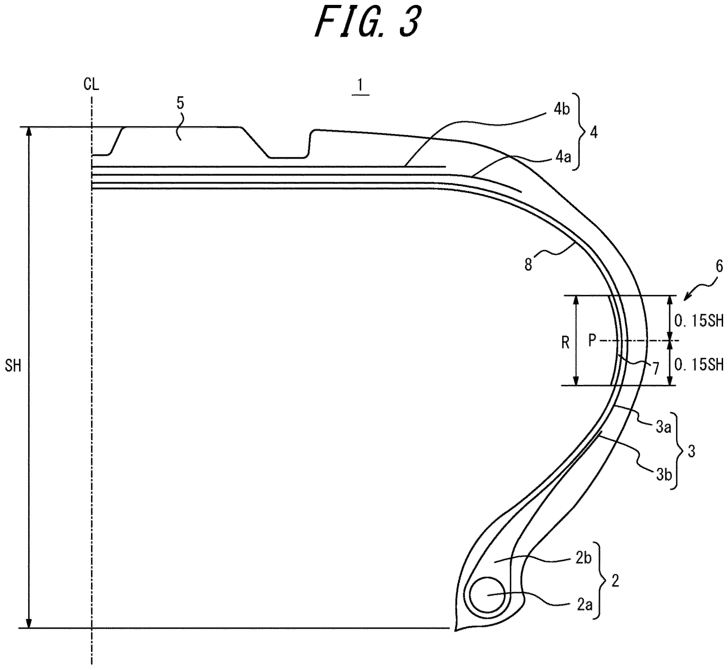

Figure 2 is a partial cross-sectional view in the tire width direction of a pneumatic tire according to an example of the first variant. Figure 3 is a partial cross-sectional view in the tire width direction of a pneumatic tire according to an example of the second variant. In increasing mass locally in the tire radial region R (or R (10%)), a rubber member (rubber sheet) 7 can be disposed inside the sidewall portion 6, as illustrated in Figure 2, or the rubber member (rubber sheet) 7 can be attached to the tire inner surface 8 (in the case of a tire with an inner liner, it can be attached to the inner side or outer side of the inner liner), as illustrated in Figure 3. However, it is more preferable that the rubber member (rubber sheet) 7 is attached to the outer surface of the tire or disposed inside the sidewall portion (within the sidewall rubber), because attaching the rubber member (rubber sheet) 7 to the inner surface 8 of the tire will increase the energy loss of the inner liner.

In Figures 1 to 3, the rubber member is illustrated as a rubber sheet, but it is not limited to a sheet-shaped rubber member, and can be of various forms, such as a semicircular cross-sectional or rectangular cross-sectional protrusion.

Here, the thickness of the sidewall portion in the above tire radial region R (or R (10%)) is preferably 1.0 to 4 mm thicker than the thickness of the thinnest part of the sidewall portion. By increasing the thickness by 1.0 mm or more, the vibration suppression effect described above can further be enhanced to further improve the quietness of the tire, on the other hand, by increasing the thickness by 4 mm or less, it can be prevented that the thickness near the tire maximum width position P become locally too large, resulting in a large weight bias, which may cause that part to flow or shift during vulcanization.

Here, the "thickness of the sidewall portion" means the thickness when measured in the direction perpendicular to the carcass line in the cross section in the tire width direction.

In addition, the thickness of the sidewall portion in the tire radial region R (or R (10%)) is "1.0 to 4 mm thicker than the thickness of the thinnest part of the sidewall portion" means that the average thickness of the sidewall portion in the tire radial region is "1.0 to 4 mm thicker than the thickness of the thinnest part of the sidewall portion". Note, that if a protrusion is formed in the tire radial region, the thickness shall include the height of the protrusion.

For the same reason, the thickness of the sidewall portion in the above tire radial region R (or R (10%)) is more preferably 1.5 to 4 mm thicker than the thickness of the thinnest part of the sidewall portion.

It is preferable to change the weight by changing the specific gravity of the material in the tire radial region R (or R (10%)). This is because by creating a localized weight-added region only by specific gravity, it is possible to reduce structural stress concentration areas by reducing unevenness, thereby improving tire durability.

In addition, the thickness of the sidewall portion at the tire maximum width position P can be 120% to 200% of the thickness of the thinnest part of the sidewall portion. By setting it to 120% or more, the vibration suppression effect described above can further be enhanced to further improve the quietness of the tire, on the other hand, by setting it 200% or less, it can be prevented that the thickness near the tire maximum width position P become locally too large, resulting in a large weight bias, which may cause that part to flow or shift during vulcanization.

In the above-mentioned tire radial region R (or R (10%)), the thickness of the sidewall portion is preferably 5 mm to 15 mm. By setting it to 5mm or more, the vibration suppression effect can further be enhanced to further improve the quietness of the tire, on the other hand, by setting it to 15mm or less, weight increase can be suppressed as much as possible.

The specific gravity of the rubber member (e.g., rubber sheet) 7 is preferably at least 1.05 times the specific gravity of the sidewall rubber, and more preferably at least 1.1 times the same. This is because it is suitable for locally increasing weight. On the other hand, to prevent the weight bias from becoming too large, the specific gravity of the rubber member (e.g., rubber sheet) 7 is preferably 1.3 times or less the specific gravity of the sidewall rubber. The specific gravity can be adjusted, for example, by adjusting the amount of filler. The Filler is not limited, but silica, aluminum hydroxide, calcium carbonate, basic magnesium carbonate, clay, diatomaceous earth, recycled and powdered rubber, carbon black, and others can be used.

In the above example, a rubber member was disposed to locally increase the weight of the above radial region R, however, various other methods are also possible. For example, in the above tire radial region R, it is also preferable to have a weighting member made of metal or fiber (metallic or non-metallic fiber). The metal and fiber may consist of steel (a linear metal that is primarily composed of iron (more than 50% by mass of iron to the total mass of the metal filament) or iron alone, or may contain metals other than iron, such as zinc, copper, aluminum, tin, etc. Examples include steel, copper, and alloys containing them. Plating treatment may be applied to strengthen adhesion to rubber.

Note, that according to the above-mentioned embodiment in which the rubber member is disposed in the above tire radial region R, it has the advantage of high durability against repeated deformation.

Here, the gauge of the tread rubber is preferably 2 to 30 mm, and more preferably 2 to 15 mm. By setting it to 2 mm or more, the quietness of can be further improved, while by setting it to 30 mm or less, it is possible to reduce rolling resistance due to weight reduction.

The "tread rubber gauge" is the thickness in the tire radial direction from the tread surface to the outermost reinforcement member in the tire radial direction (e.g., the outermost belt layer in the tire radial direction, and if the belt reinforcement layer is disposed on the outer side in the tire radial direction of the belt, the outermost belt reinforcement layer in the tire radial direction) at the tire equatorial plane, under the reference condition. However, if grooves are disposed on the tire equatorial plane, it shall be assumed that there are no grooves.

The tire aspect ratio is preferably between 20 and 80, 20 to 65 is more preferred, and 35 to 55 is even more preferred. This is because tires with aspect ratios in the above range can have relatively thin sidewall portions, and it is particularly suitable for both: reducing rolling resistance by thinning the sidewall portion, and reducing vibration and thus noise due to the local weight increase in the above tire radial region R. In other words, by having the tire aspect ratio of 20 (preferably 35) or more, the noise emission can be reduced, on the other hand, by having the tire aspect ratio of 80 (preferably 65, more preferably 55) or less, the tire weight can be easily reduced and rolling resistance can be reduced. Note, that it is preferable to use a configuration without side-reinforcing rubber.

EXAMPLES of this disclosure are described below, however, the present disclosure is not limited in any way to the following examples.

### EXAMPLES

### (EXAMPLE 1)

Three prototypes of tires of tire size 205/55R16 with added mass in the tire maximum width position in the above tire radial region R, as illustrated in Figure 1, were made with different weights (Examples 1 to 3). In addition, a conventional type without adding mass at the maximum width position was also prepared (Comparative Example 1). In Example 1, a mass of 55 g was added, in Example 2, a mass of 105 g was added, and in Example 3, a mass of 165 g was added. As a result, the mass of the sidewall portion in the above tire radial region R in Examples 1, 2, and 3 was 0.5%, 1%, and 2% of the total mass of the pneumatic tire, respectively. In addition, in Examples 1, 2, and 3, the thickness of the sidewall portion in the above tire radial region R was 0.5 mm, 1 mm, and 2 mm thicker than the thickness of the thinnest part of the sidewall portion, respectively.

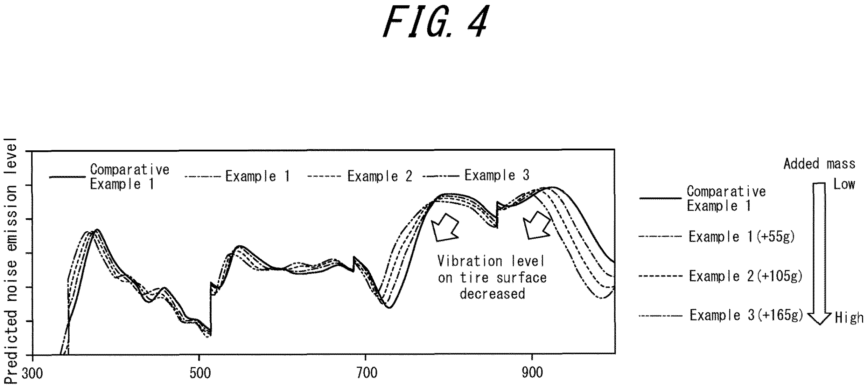

For these tires, the vibration modes in the above tire radial region R were measured by FEM simulation. The measurement results are provided in Figure 4.

As illustrated in Figure 4, the amplitude of 800 Hz to 1000 Hz is reduced in Examples 1 to 3 compared to Comparative Example 1.

### (EXAMPLE 2)

Next, the effect of this disclosure was verified by varying the position at which the weight was increased. In Example 4, a tire with a mass of 130 g added to the maximum width position was manufactured as a prototype. In Example 4, the mass of the sidewall portion in the above tire radial region R was 1.1% of the total mass of the pneumatic tire. In addition, in Example 4, the thickness of the sidewall portion in the above tire radial region R was 1 mm thicker than the thickness of the thinnest part of the sidewall portion. In Comparative Example 2, a mass of 130 g was added to the surface of the sidewall portion in the region radially outer side than the tire radial region R. In Comparative Example 3, a mass of 130 g was added to the surface of the sidewall portion in the region radially inner side than the tire radial region R. In Comparative Example 4, a mass of 130 g was added across the entire sidewall portion.

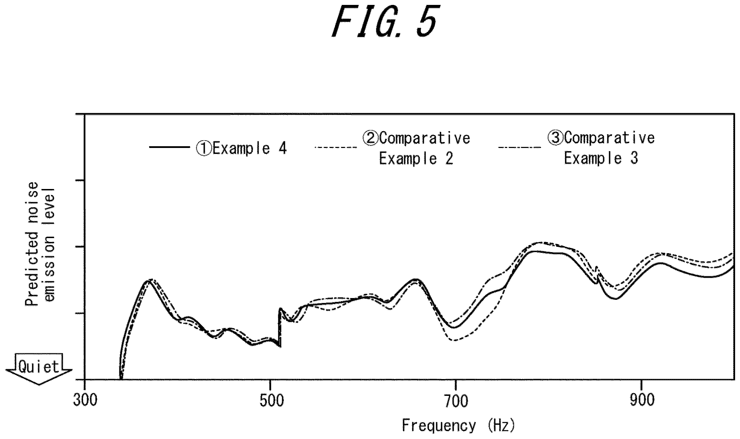

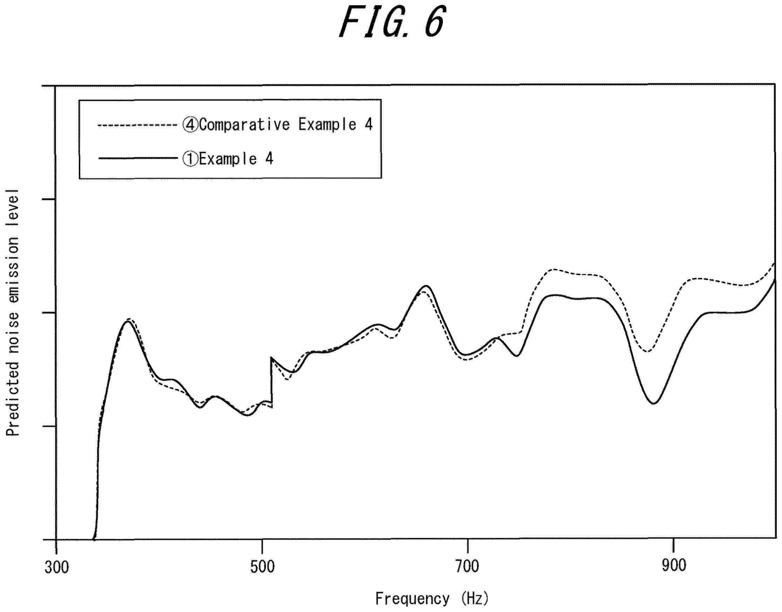

Vibration modes of these tires at the position where the rubber sheet is attached were measured by FEM simulation. The measurement results of Example 4 and Comparative Examples 2 and 3 are provided in Figure 5. The measurement results of Example 4 and Comparative Example 4 are also provided in Figure 6.

Figure 5 indicates that the amplitude of 800 Hz to 1000 Hz is reduced in Example 4 compared to Comparative Examples 2 and 3.

Figure 6 also indicates that the amplitude of 800 Hz to 1000 Hz is reduced in Example 4 compared to Comparative Example 4.

The weight increase in Examples 1 to 3 was 0.5%, 1%, and 2%, respectively, without causing excessive weight increase. Note, that there was no rubber flow or displacement during vulcanization when the rubber sheets corresponding to these masses were attached.

### REFERENCE SIGNS LIST

- 1: Pneumatic tire
- 2: Bead portion
- 3: Carcass
- 4: Belt
- 5: Tread portion
- 6: Sidewall portion
- 7: Rubber member
- 8: Tire inner surface

## Claims

1. A pneumatic tire, wherein
when a condition in which the pneumatic tire is mounted on an applicable rim, filled to prescribed internal pressure, and unloaded is defined as a reference condition,
in the reference condition, mass of a sidewall portion in a tire radial region between positions each spaced apart, from a tire maximum width position, by 15% of tire cross-sectional height to inner side and outer side in the tire radial direction is 1.5% to 5% of overall mass of the pneumatic tire.

2. The pneumatic tire according to claim 1, wherein in the reference condition, mass of a sidewall portion in a tire radial region between positions each spaced apart, from a tire maximum width position, by 10% of tire cross-sectional height to inner side and outer side in the tire radial direction is 1.5% to 5% of overall mass of the pneumatic tire.

3. The pneumatic tire according to claim 1 or 2, wherein a rubber member is disposed in the tire radial region.

4. The pneumatic tire according to claim 3, wherein the specific gravity of the rubber member is at least 1.05 times the specific gravity of sidewall rubber.

5. The pneumatic tire according to claim 1 or 2, having a weighting member made of metal or fiber in the tire radial region.
